# EUROPEAN PATENT APPLICATION

(11) **EP 2 555 369 A1**
(43) Date of publication of application: **06.02.2013**
(21) Application number: 11762741.4
(22) Date of filing: 28.03.2011
(51) Int. Cl.: H02J 3/00, H02J 7/00

(54) **RECHARGING SYSTEM**

(30) Priority: 29.03.2010 JP 2010075469
(71) Applicant: Sanyo Electric Co., Ltd., Osaka 570-8677 (JP)
(72) Inventor: IWASAKI Toshiya, Moriguchi-Shi Osaka 570-8677 (JP); SUYAMA Atsushi, Moriguchi-Shi Osaka 570-8677 (JP); SHIMIZU Atsushi, Moriguchi-Shi Osaka 570-8677 (JP); MURASHIMA Hirotsugu, Moriguchi-Shi Osaka 570-8677 (JP)
(86) International application number: PCT/JP2011/057527
(87) International publication number: WO 2011/122517

(57) **Abstract**

A recharging system that recharges batteries is provided with a recharging unit that recharges the batteries by consuming power that is supplied. The recharging unit has the ability to recharge the batteries by consuming system power supplied by a power company. The power company sets power rates that are higher the larger the maximum amount of power supplied per unit of time, and a single charge performed by the recharging unit begins in the preceding unit of time among adjacent units of time, and finished in the following unit of time among the adjacent units of time.

## Description

### Technical Field

The present invention relates to a recharge system that recharges a battery and the like disposed in an electric vehicle.

### Background Art

In recent years, a power storage battery is going large, studied so as to be used for: driving of electric vehicles such as an electric car, an electric bike and the like; and storing power that is consumed in households, stores, buildings and the like, and is expected to be widespread in the future. Besides, from the viewpoint of reduction in emission amount of carbon dioxide and the like, an electric vehicle is desired to be widespread.

For the spread of an electric vehicle, the spread of a recharge system, which recharges a power storage battery (hereinafter, called a battery) for driving an electric vehicle, is inevitable. Especially, the spread of a recharge system, which recharges a battery of an electric vehicle outside a household, is inevitable. Regarding this, a plan is proposed so as to dispose a recharge system at stores such as a convenience store and the like.

In a case where a recharge system is disposed at a store and the like, besides power that is consumed by various apparatuses such as an illumination device, an air conditioner, a refrigerator and the like, it is also required for the store and the like to supply power that is consumed by the recharge system. The power consumed by a recharge system can be equal in amount to (e.g., substantially equal to each other in the order of power) the power consumed by various apparatuses in a store and the like. Because of this, the power amount which a store and the like purchase from an electric power company increases, which becomes a problem that the power rate increases, and the problem is likely to become a cause that discourages the spread of a recharge system.

Accordingly, for example, a patent document 1 proposes a recharge system, which preferentially uses a time zone where a unit power rate is inexpensive and a time zone where power is in less demand, thereby reducing the power rate.

### Citation List

### Patent Literature

PLT1: JP-A-2008-67418

### Summary of Invention

### Technical Problem

According to the recharge system proposed by the patent document 1, it is impossible to reduce the power rate without performing a recharge during time zones such as late night, early morning and the like which are inconvenient and limited. However, it is conceivable that there are few cases where an electric vehicle user (hereinafter, simply called a user) comes to a store at late night, in early morning that are inconvenient time zones to perform a recharge. Further, a somewhat long time is required to perform a recharge, accordingly, during the above limited time zones, the number of electric vehicles that are able to be recharged is few. Accordingly, it becomes hard to reduce the power rate by means of the above recharge system.

Accordingly, it is an object of the present invention to provide a recharge system that allows reduction in power rate without setting a limit on a time zone where to perform a recharge.

### Solution to Problem

To achieve the above object, in a recharge system for recharging a battery according to the present invention, a structure is employed, in which the recharge system comprises a recharge portion that recharges the battery by consuming supplied power; the recharge portion is able to recharge the battery by consuming system power supplied from an electric power company; the electric power company sets a higher power rate as a maximum value of power amount supplied during a unit time duration increases; and one recharge performed by the recharge portion is started at a time in a front unit time duration of adjacent unit time durations and ended at a time in a rear unit time duration of the adjacent unit time durations.

According to such a structure, it becomes possible to distribute the system power amount consumed by one recharge operation of the recharge portion to two unit time durations. Because of this, it becomes possible to make the system power amount consumed during each unit time duration relatively small. Accordingly, it becomes possible to alleviate the maximum value of the system power amount consumed during the unit time duration, and it becomes possible to reduce the power rate.

Besides, the power rate set by the electric power company may include a fixed basic rate and a measured rate, and the basic rate may be increased as the maximum value of the power amount supplied during the unit time duration becomes larger.

Besides, in the above structure, a time duration required for the one recharge performed by the recharge portion may be equal to or shorter than the unit time duration.

According to such a structure, even in a case where the power, which is consumed to perform a recharge during a time duration equal to or shorter than the unit time duration, is prone to become large, it becomes possible to make the system power amount consumed during each unit time duration relatively small. Accordingly, it becomes possible to alleviate the maximum value of the system power amount consumed during the unit time duration, and it becomes possible to reduce the power rate.

Besides, in the above structure, a middle time of the time duration for the one recharge performed by the recharge portion may be substantially equal to a time at a boundary between the adjacent unit time durations.

According to such a structure, it becomes possible to easily distribute the system power amount consumed by the one recharge operation of the recharge portion to two unit time durations. Accordingly, it becomes possible to effectively alleviate the maximum value of the system power amount consumed during the unit time duration.

Besides, in the above structure, the recharge system may further include a power storage portion that supplies power by means of a discharge; during the one recharge performed by the recharge portion, the recharge portion may consume both of the system power and the power supplied form the power storage portion.

According to such a structure, it becomes possible to tolerate a change in the time duration, during which the recharge portion performs the recharge, by a time duration that corresponds to a power amount suppliable by the power storage portion. Further, by tolerating the recharge portion performing the recharge by consuming at the same time both of the system power and the power supplied from the power storage portion, it becomes possible to make the power, which the power storage portion supplies by means of the discharge, relatively small without prolonging the recharge time duration. Because of this, it becomes possible to alleviate the power storage portion discharging rapidly a large amount of power and to reduce a burden on the power storage portion.

Besides, in the above structure, the recharge system may further include: an input portion into which a command from a user is input; a control portion which controls operation of the recharge portion; and a notification portion which gives notice to the user; wherein when the user inputs, into the input portion, a command for making a reservation for a recharge of the battery, the control portion may prepare a recharge schedule of the battery recharge performed by the recharge portion and control the notification portion to give notice of at least part of the recharge schedule to the user.

According to such a structure, it becomes possible to alleviate a situation (recharge waiting) occurring in which when the user goes to a store and the like to recharge the battery, other users are already performing a recharge and the user cannot perform the recharge soon.

### Advantageous Effects of Invention

According to the present invention, it becomes possible to alleviate the maximum value of a system power amount consumed during a unit time duration, and it becomes possible to reduce the power rate.

The significance and advantages of the present invention will be more apparent from embodiments described below. However, the following embodiments are each an embodiment of the present invention and the present invention and the meaning of a term of each constituent element are not limited to those described in the following embodiments.

### Brief Description of Drawings

[Fig. 1] is a block diagram showing a structural example of a recharge system according an embodiment of the present invention.
[Fig. 2] is a graph showing an overview of a method for calculating a power rate of system power.
[Fig. 3] is a graph showing an example of power that is consumed in a case where recharge operation of a recharge portion is controlled by an undesirable method.
[Fig. 4] is a graph showing an amount of system power that is consumed during each unit time duration in the case where the recharge operation of the recharge portion is controlled as shown in Fig. 3.
[Fig. 5] is a graph showing an example of power that is consumed in a case where recharge operation of a recharge portion is controlled by a preferred method.
[Fig. 6] is a graph showing an amount of system power that is consumed during each unit time duration in the case where the recharge operation of the recharge portion is controlled as shown in Fig. 5.
[Fig. 7] is a graph showing an example of power that is consumed in a case where recharge operation of a recharge portion is controlled by another preferred method.
[Fig. 8] is a graph showing an amount of system power that is consumed during each unit time duration in the case where the recharge operation of the recharge portion is controlled as shown in Fig. 7.

### Description of embodiments

A recharge system according to an embodiment of the present invention is described hereinafter with reference to drawings. First, an example of a structure and operation of the recharge system according to the embodiment of the present invention is described with reference to drawings.

### <Recharge system>

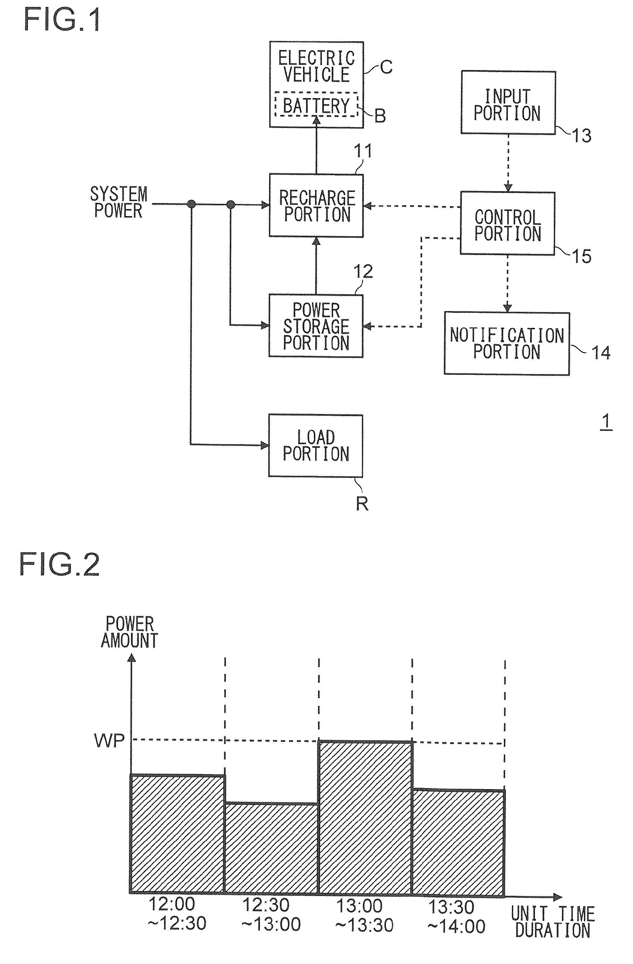

Fig. 1 is a block diagram showing a structural example of the recharge system according the embodiment of the present invention. Here, a solid-line arrow, which connects blocks in the figure to each other, shows a flow of power, and a broken-line arrow shows a flow of information.

The recharge system 1 shown in Fig. 1 includes: a recharge portion 11 that consumes supplied power, supplies power to and recharges a battery B disposed in an electric vehicle C; a power storage portion 12 that stores supplied power and supplies power by means of a discharge; an input portion 13 into which a command from a user is input; a notification portion 14 that gibes notice to the user; and a control portion 15 into which the command from the user is input from the input portion 13 and which controls operation of the recharge portion 11 and the power storage portion 12.

Power (hereinafter, called system power) supplied from an electric power company is supplied to the recharge system 1. The system power is also supplied to various apparatuses (e.g, an illumination device, an air conditioner, a refrigerator and the like, hereinafter, called a load portion R) in a store and the like provided with the recharge system 1 and is consumed.

The recharge portion 11 suitably converts (e.g., converts a.c. power into d.c. power, or adjusts a voltage value of d.c. power supplied to the battery B of the electric vehicle C) the system power and the power supplied by a discharge from the power storage portion 12, supplies the power to recharge the battery B of the electric vehicle C.

The power storage portion 12 converts (e.g., converts a.c. power into d.c. power, or adjusts a voltage value of the d.c. power) the supplied system power when necessary and recharges itself. The power storage portion discharges the recharged power, thereby supplying the power to the recharge portion. Besides, a structure may be employed, in which the power supplied from the power storage portion 12 is supplied to the load portion R.

The input portion 13 is operated by the user or receives the command transmitted from a user's possession (e.g, a mobile terminal and the like), whereby the user's command is input into the input portion. Besides, the input portion 13 transmits the input user's command to the control portion 15. As the user's command, for example, there is a command for starting the recharge of the battery B of the electric vehicle C, a command for making a reservation for the recharge of the battery B of the electric vehicle C, and a command for stopping the recharge of the battery B of the electric vehicle C.

The notification portion 14 includes, for example, a display device, a speaker and the like, outputs an image and a voice, or includes a transmission device, and transmits information to the user's possession (e.g., a mobile terminal that is registered beforehand in the recharge system 1), thereby giving notice to the user. As the content the notification portion gives to the user, there is, for example, a recharge schedule for the battery B of the electric vehicle C for which the recharge is reserved; a start, an end, and a stop of the recharge.

The control portion 15 controls the recharge operation of the recharge portion 11, the recharge and discharge operation of the power storage portion 12. Upon confirming that the command for making a reservation for the recharge of the battery B of the electric vehicle C is input into the input portion 12, the control portion 15 prepares a recharge schedule based on the command. And, the control portion 15 controls the notification portion 14, thereby giving notice of part or all of the recharge schedule to the user.

Besides, the control portion 15 prepares a recharge schedule which allows reduction of a power rate charged to a store and the like without setting a limit on a time zone where to recharge the battery B of the electric vehicle C. And, based on the prepared recharge schedule, the control portion controls the operation of the recharge portion 11 and the power storage portion 12. In the meantime, details (i.e., methods for controlling the recharge portion 11 and the power storage portion 12) of the recharge schedule are described later.

The recharge schedule can include a start time and an end time of the recharge of the battery B of the electric vehicle C. Besides, times at which the recharge and discharge of the power storage portion 12 start can be included. The user is notified of the recharge schedule by the notification portion 14, thereby recognizing at least the recharge start time. And, if the electric vehicle C and the recharge portion 11 are connected to each other by the start time, the recharge of the battery B of the electric vehicle C is started at the start time.

According to the above structure, for example, when the user goes to a store and the like to recharge the battery B of the electric vehicle C, it becomes possible to alleviate a situation (recharge waiting) occurring in which other uses are already performing a recharge and the user cannot perform the recharge soon.

Besides, the recharge system 1 is able to alleviate the occurrence of recharge waiting and reduce the power rate, accordingly, becomes preferable to the user side and the side of a store and the like. Because of this, the recharge system is expected to become widespread. And, by spreading the recharge system 1, it becomes possible to promote the spread of electric vehicles and to achieve reduction in emission amount of carbon dioxide.

Here, the structure of the recharge system shown in Fig. 1 is only an example, and another structure may be employed. For example, a structure may be employed, in which the recharge system includes another power supply (e.g., a solar battery and the like) that is able to supply power to the recharge portion 11, the power storage portion 12, the load portion R and the like.

Besides, the recharge portion 11 may be connectable to only one electric vehicle C that is recharged, or may be connectable to a plurality of the electric vehicles C. Besides, in a case of the structure in which the recharge portion 11 is connectable to the plurality of the electric vehicles C, a structure may be employed, in which the control portion 15 controls the recharge portion 11, thereby recharging the respective batteries B of the electric vehicles C connected to the recharge portion 11 one after another.

### <Method for calculating power rate>

Next, a method example for calculating the power rate of the system power is described with reference to drawings. Fig. 2 is a graph showing an overview of the method for calculating the power rate of the system power. Here, the graph shown in Fig. 2 shows, by means of a graph height, the system power amount that is consumed by the entire store and the like which have the recharge system 1 for each of unit time durations (for every 30 minutes of a first half of 00-30 minutes and a second half of 30 to 00 minutes of every hour) of 12:00-12:30, 12:30-13:00, 13:00-13:30, and 13:30-14:00.

The power rate of the system power includes, for example, a fixed basic rate and a measured rate. Generally, because of a reason for effective power generation (stabilized power generation) and the like, an electric power company sets a higher basic rate as the maximum value of the system power amount consumed during a unit time duration becomes larger.

In the example shown in Fig. 2, a power amount WP consumed during a unit time duration of 13:00-13:30 is larger than the power amounts consumed during the other unit time durations, accordingly, the power amount becomes the maximum value. Because of this, based on the power amount WP consumed during the unit time duration of 13:00-13:30, the basic rate is set. Here, in Fig. 2, for the sake of simple description, only the four unit time durations are shown; however, a general electric power company calculates the maximum value of the power amounts from more unit time durations (e.g., for one year).

### <Recharge schedule>

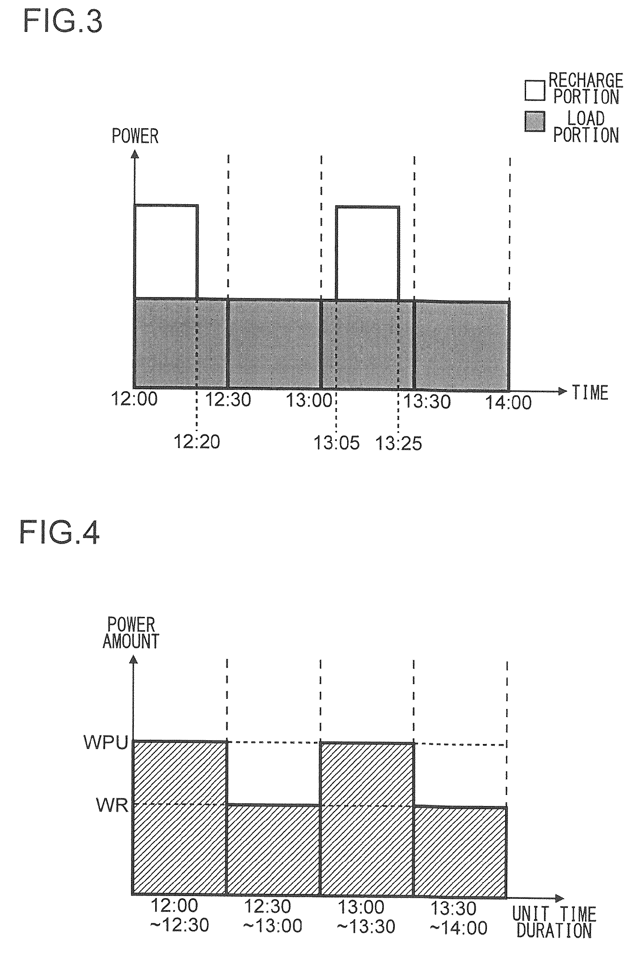

As described above, by reducing the maximum value of the system power amount consumed during the unit time duration, it is possible to reduce the power rate (especially, the basic rate, hereinafter, the same applies). Hereinafter, a recharge schedule (a control method by which the control portion 15 controls the recharge operation of the recharge portion 11) for reducing the maximum value of the system power amount consumed during the unit time duration is described with reference to drawings. First, for comparison, an undesirable method for controlling the recharge operation of the recharge portion 11 is described with reference to Fig. 3 and Fig. 4.

Fig. 3 is a graph showing an example of the power that is consumed in a case where the recharge operation of the recharge portion is controlled by means of the undesirable method. Besides, Fig. 4 is a graph showing the system power amount that is consumed during each unit time duration in the case where the recharge operation of the recharge portion is controlled as shown in Fig. 3. Both of Fig. 3 and Fig. 4 show the same time as the time (12:00-14:00) shown in Fig. 2. Besides, in Fig. 3, the size (the size of the system power used to recharge the battery B) of the system power consumed by the recharge portion 11 is shown by means of a height of a white region, while the size of the system power consumed by the load portion R is shown by means of a height of a grey region.

Besides, hereinafter, for the sake of simple description, as shown in Fig. 3, it is assumed that the system power size consumed by the load portion R is constant irrespective of the time. Because of this, as shown in Fig. 4, also the system power amount WR consumed by the load portion R during each unit time duration becomes constant. Besides, as shown in Fig. 3, also the power size, which is consumed (recharged into the battery B of the electric vehicle C) when the recharge portion 11 performs the recharge operation, becomes constant irrespective of the time. Further, as shown in Fig. 3, it is assumed that a time duration (a recharge duration for one electric vehicle C) required for one recharge operation of the recharge portion 11 is a time duration (20 minutes) that is equal to or shorter than the unit time duration (30 minutes) and becomes the same duration for every recharge.

In the example shown in Fig. 3, during a time duration of 12:00-12:20 and during a time duration of 13:05-13:25, the recharge of the battery B of the electric vehicle C is performed. Both time durations are confined in the unit time duration (12:00-12:30, 13:00-13:30).

When the recharge operation of the recharge portion 11 is performed as shown in Fig. 3, the total power amount consumed by one recharge operation of the recharge portion 11 becomes equal to the system power amount that is consumed by the recharge portion 11 during one unit time duration. Especially, according to a rapid recharge that is performed during a time duration shorter than the unit time duration, the consumed power becomes large. Because of this, the system power amount consumed during one unit time duration is likely to become large. Accordingly, as shown in Fig. 4, the system power amount WPU consumed during the unit time duration (12:00-12:30, 13:00-13:30), during which the recharge operation of the recharge portion 11 is performed, becomes relatively large.

In this case, based on at least the power amount WPU for the unit time duration (12:00-12:30, 13:00-13:30), during which the recharge operation of the recharge portion 11 is performed, the power rate is set. Accordingly, the power rate is likely to increase.

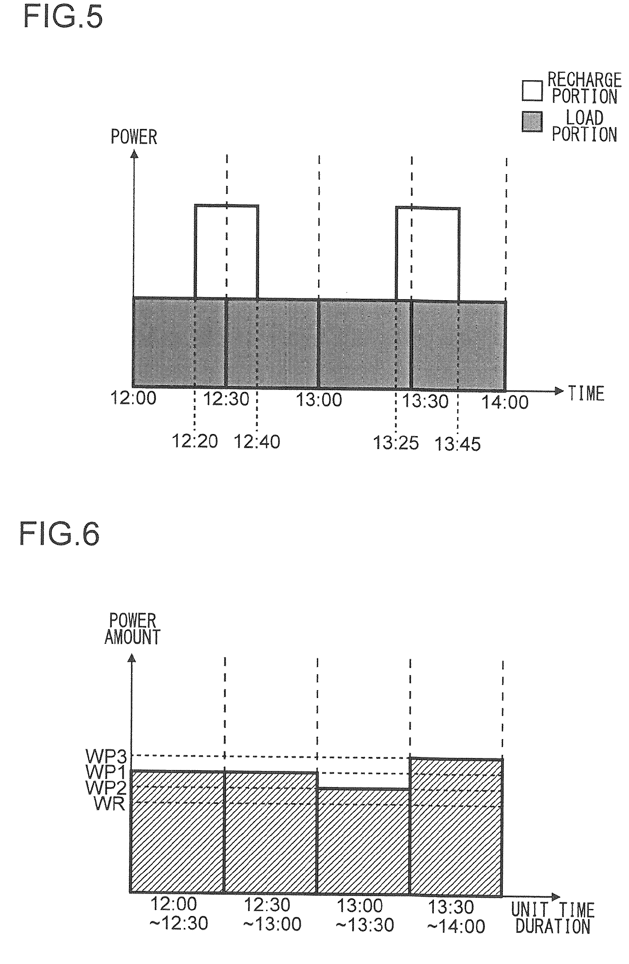

In contrast to this, a preferred method for controlling the recharge operation of the recharge portion 11 is described with reference to Fig. 5 and Fig. 6.

Fig. 5 is a graph showing an example of the power that is consumed in a case where the recharge operation of the recharge portion is controlled by means of a preferred method, and corresponds to Fig. 3 that shows the undesirable control method. Fig. 6 is a graph showing a system power amount that is consumed during each unit time duration in the case where the recharge operation of the recharge portion is controlled as shown in Fig. 5, and corresponds to Fig.4 that shows the undesirable control method. Here, Fig. 5 is identical to Fig. 3 except that the time during which the recharge portion 11 is operated is different from the time shown in Fig. 3. Because of this, in Fig. 5, description of the same portions as in Fig. 3 is skipped, and different portions are described in detail.

In the example shown in Fig. 5, during each of a time duration of 12:20-12:40 and a time duration of 13:25-13:45, the recharge of the battery B of the electric vehicle C is performed by the recharge portion 11. Both of the time durations when the recharge is performed extend into (bridge) the unit time durations (12:00-12:30 and 12:30-13:00, 13:00-13:30 and 13:30-14:00) that are different (do not overlap) from each other.

According to the above structure, even in a case (e.g., a case where a rapid recharge is performed) where the power consumed to perform the recharge during a time duration shorter than the unit time duration is prone to become large, it becomes possible to distribute the system power amount consumed by one recharge operation of the recharge portion 11 to the two unit time durations. Because of this, as shown in Fig. 6, it becomes possible to make the system power amounts WP1 to WP3 consumed during each unit time duration relatively small. For example, it becomes possible to make them smaller than the power amount WPU shown in Fig. 4. Accordingly, it becomes possible to alleviate the maximum value of the system power amount consumed during the unit time duration, and it becomes possible to reduce the power rate.

Further, it is enough to only slightly change the time duration for performing the recharge operation of the recharge portion 11, accordingly, it is not necessary to limit the recharge time zone to late night, early morning and the like. Accordingly, it becomes possible to easily reduce the power rate without limiting the recharge time zone.

Besides, in the case where the recharge portion 11 performs a plurality of the recharge operations, the time duration for performing each recharge extends into unit time durations different form each other. Because of this, it becomes possible to alleviate the system power amount, which is consumed by the plurality of recharge operations of the recharge portions 11, being distributed to the overlapping unit time durations, and it becomes possible to alleviate the system power amount consumed during the unit time durations becoming large.

In the meantime, in the recharge operation that is performed during the time duration of 12:20-12:40 shown in Fig. 5, the middle time (12:30) and the time (12:30) at the boundary between the two unit time durations are substantially equal to each other. According to this structure, it becomes possible to easily distribute the system power amount consumed by one recharge operation of the recharge portion 11 substantially equally to the two unit time durations. Because of this, it becomes possible to effectively alleviate the maximum value of the system power amount consumed during the unit time duration (hereinafter, the time duration when the recharge operation of the recharge portion 11 is performed as described above is defined as a "reference time duration").

However, because of various circumstances (e.g., a change in the recharge start time due to a reason of the user), it is hard to perform the control such that the recharge is surely performed during the reference time duration (in the above example, 20 to 40 minutes (or 50 to 10 minutes of every hour also is all right)). Besides, if the time duration for performing the recharge operation is limited more than necessary, it becomes hard to effectively recharge the battery B of the electric vehicle C.

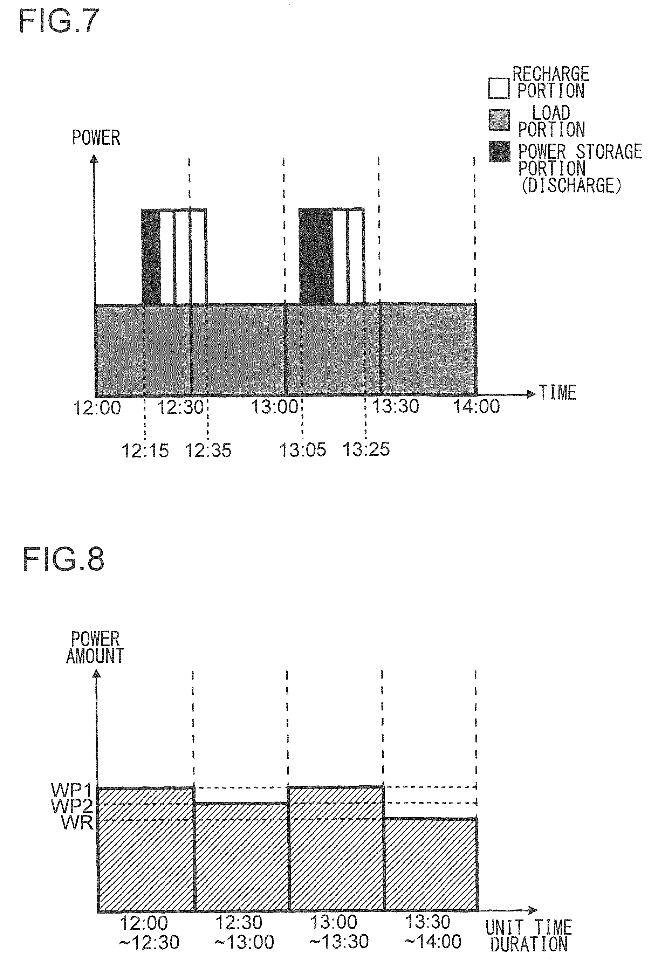

To avoid this, hereinafter, with reference to Fig. 7 and Fig. 8, a recharge schedule (a control method that is performed by the control portion 15 to control the recharge operation of the recharge portion 11 and the discharge operation of the power storage portion 12) is described which is able to tolerate a change in the time duration for performing the recharge operation while effectively alleviating the maximum value of the system power amount consumed during the unit time duration.

Fig. 7 is a graph showing an example of the power that is consumed in a case where the recharge operation of the recharge portion is controlled by means of another preferred method, and corresponds to Fig. 5 that shows the above preferred method. Fig. 8 is a graph showing the system power amount that is consumed during each unit time duration in the case where the recharge operation of the recharge portion is controlled as shown in Fig. 7, and corresponds to Fig. 6 that shows the above preferred method. Here, Fig. 7 is identical to Fig. 5 except that the time during which the recharge portion 11 is operated is different from the time shown in Fig. 5 and the power supplied by discharge from the power storage portion 12 is used for the recharge operation of the recharge portion 11. Because of this, in Fig. 7, hereinafter, description of the same portions as in Fig. 5 is skipped, and different portions are described in detail. Here, in Fig. 7, the size (the size of the power that is supplied from the power storage portion 12 and used to recharge the battery B) of the power, which is supplied from the power storage portion 12 and consumed by the recharge portion 11, is shown by means of a height of a black region.

In the example shown in Fig. 7, during each of a time duration of 12:15-12:35 and a time duration of 13:05-13:25, the recharge of the battery B of the electric vehicle C is performed by the recharge portion 11. However, for the recharge operation during each of the time duration of 12:15-12:20 and the time duration of 13:05-13:15, not only the system power but also the power supplied by the discharge from the power storage portion 12 are used to recharge the battery B of the electric vehicle C.

According to the above structure, in each unit time duration, an upper limit (in the present example, half of the system power amount consumed by one recharge operation) is set on the system power amount which the recharge portion 11 consumes for the recharge operation. Because of this, as shown in Fig. 8, it becomes possible to make the system power amounts WP1, WP2, and WR consumed during each unit time duration relatively small. For example, it becomes possible to make them equal to or smaller than the power amount WP1 shown in Fig. 6. Accordingly, it becomes possible to effectively alleviate the maximum value of the system power amount consumed during the unit time duration, and it becomes possible to further reduce the power rate.

Besides, it becomes possible to tolerate a change in the time duration for performing the recharge operation of the recharge portion 11 by a time duration that corresponds to the power amount suppliable from the power storage portion 12. For example, if the power amount recharged in the power storage portion 12 is equal to 1/4 of the power amount consumed by the recharge operation of the recharge portion 11, it becomes possible to change the time duration for performing the recharge operation of the recharge portion 11 by 1/4 (in the above example, five minutes) from the reference time duration.

Accordingly, it becomes possible to tolerate the change in the time duration for performing the recharge operation while effectively alleviating the maximum value of the system power amount consumed during the unit time duration. Specifically, for example, if the user changes the time duration for performing the recharge operation, it becomes possible to effectively reduce the power rate while performing the recharge during the changed time duration.

Besides, in a case where a power amount equal to or more than 1/2 of the power amount consumed by the recharge operation of the recharge portion 11 is suppliable from the power storage portion 12, for example, it becomes possible to perform the recharge operation during any time duration as shown by the recharge operation during the time duration of 13:05-13:25 in Fig. 7.

Here, in Fig. 7, during a predetermined time duration after the start of the recharge operation of the recharge portion 11, the power storage portion 12 is made to discharge to supply the power; however, during a predetermined time duration before the end of the recharge operation of the recharge portion 11, the power storage portion 12 may be made to discharge to supply the power. Especially, in a case where the time duration for performing the recharge operation of the recharge portion 11 is moved forward in the reference time duration, as shown in Fig. 7, the power storage portion 12 may be made to discharge during a predetermined time duration after the start of the recharge operation of the recharge portion 11, while in a case where the time duration for performing the recharge operation of the recharge portion is moved backward in the reference time duration, the power storage portion 12 may be made to discharge during a predetermined time duration before the end of the recharge operation of the recharge portion 11.

Besides, in Fig. 7, the recharge for which the recharge portion 11 consumes the system power and the recharge for which the recharge portion 11 consumes the power supplied by the discharge from the power storage portion 12 are separately performed; however, they may be performed concurrently with each other. Specifically, for example, in the recharge during the time duration of 12:15-12:35 in Fig. 7, instead of the power storage portion 12 supplying the power from 12:15 to 12:20, 1/3 of the power may be dispersedly supplied from 12:15 to 12:30.

According to this structure, it becomes possible to make the power supplied by the discharge from the power storage portion 12 small without prolonging the recharge time duration. Because of this, it becomes possible to alleviate the power storage portion 12 rapidly discharging (further recharging) large power and to reduce the burden on the power storage portion 12. Besides, even according to such a structure, as described above, it is possible to effectively alleviate the maximum value of the system power amount consumed during the unit time duration.

Besides, in the case where the time duration for performing the recharge operation of the recharge portion 11 is moved forward in the reference time duration, during the later unit time durations (in the example in Fig. 8, 12:30-13:00, 13:30-14:00), the system power amount consumed by the recharge portion 11 is likely to become small. Because of this, during these time durations, the power storage portion 12 may be recharged by means of the system power. Likewise, in the case where the time duration for performing the recharge operation of the recharge portion 11 is moved backward in the reference time duration, the power storage portion 12 may be recharged by means of the system power during the front of the unit time duration.

Besides, the time durations shown in Fig. 5 and Fig. 7 are measured by a watch that comes with a wattmeter and the like installed by an electric power company, and there is a case where a deviation occurs with respect to an actual time. It is preferable that thanks to this deviation, for example, the unit time duration ranges from 10 minutes to 40 minutes and from 40 to 10 minutes of every hour in actual time. In this case, it becomes possible to set the start time of the reference time duration at 0 minutes of every hour (or 30 minutes is all right). Because of this, it becomes possible to set a time, which is clear and easy for the user to memorize, as the recharge start time.

Besides, for the sake of simple description, the size of the power consumed for the recharge operation of the recharge portion 11 is constant irrespective of the time; however, it may not be constant. In this case, to substantially equally distribute the system power amount, which is consumed by one recharge operation of the recharge portion 11, to the two unit time durations, the middle time of the recharge operation by the recharge portion 11 may be deviated from the time at the boundary between the two unit time durations. Besides, also in this case, to simplify the control of the recharge portion 11 by the control portion 15, the middle time of one recharge operation of the recharge portion 11 and the time at the boundary between the two unit time durations may be set to become substantially equal to each other.

### <Modifications>

In the recharge system 1 according to the embodiments of the present invention, the operation of portions such as the control portion 15 and the like or of all the portions may be performed by a control device such as a micro-computer and the like. Further, all the portions or a portion of the functions achieved by such a control device may be written as a program, and the program may be executed on a program execution device (e.g., a computer), whereby all the portions of or a portion of the functions may be achieved.

In addition, besides the above cases, the recharge system 1 shown in Fig. 1 is achievable by hardware, or a combination of hardware and software. Besides, in the case where a portion of the recharge system is composed by means of software, a block related to the portion achieved by the software represents a function block of the portion.

Hereinbefore, the embodiments of the present invention are described; however, the scope of the present invention is not limited to these embodiments, and it is possible to add various modifications without departing the spirit of the present invention and put them into practical use.

### Industrial Applicability

The present invention is applicable to a recharge system that recharges a battery and the like which are disposed in an electric vehicle. Especially, it is preferable to apply the present invention to a recharge system that consumes a large power and is able to perform a rapid recharge during a time duration which is shorter than a unit time duration.

### Reference Signs List

- 1: recharge system
- 11: recharge portion
- 12: power storage portion
- 13: input portion
- 14: notification portion
- 15: control portion
- B: battery
- C: electric vehicle
- R: load portion

## Claims

1. In a recharge system for recharging a battery, the recharge system comprises a recharge portion that recharges the battery by consuming supplied power;
the recharge portion is able to recharge the battery by consuming system power supplied from an electric power company;
the electric power company sets a higher power rate as a maximum value of power amount supplied during a unit time duration increases; and
one recharge performed by the recharge portion is started at a time in a front unit time duration of adjacent unit time durations and ended at a time in a rear unit time duration of the adjacent unit time durations.

2. The recharge system according to claim 1, wherein
a time duration required for the one recharge performed by the recharge portion is equal to or shorter than the unit time duration.

3. The recharge system according to claim 1 or claim 2, wherein
a middle time of the time duration for the one recharge performed by the recharge portion is substantially equal to a time at a boundary between the adjacent unit time durations.

4. The recharge system according to any one of claim 1 to claim 3, further comprising a power storage portion that supplies power by means of a discharge;
during the one recharge performed by the recharge portion, the recharge portion consumes both of the system power and the power supplied form the power storage portion.

5. The recharge system according to any one of claim 1 to claim 4, further comprising:
an input portion into which a command from a user is input;
a control portion which controls operation of the recharge portion; and
a notification portion which gives notice to the user; wherein
when the user inputs, into the input portion, a command for making a reservation for a recharge of the battery, the control portion prepares a recharge schedule of the battery recharge performed by the recharge portion and controls the notification portion to give notice of at least part of the recharge schedule to the user.
